# FASCICULE DE BREVET EUROPEEN

(11) **EP 1 364 832 B1**
(45) Date de publication et mention de la délivrance du brevet: **17.09.2014**
(21) Numéro de dépôt: 02291379.2
(22) Date de dépôt: 04.06.2002
(51) Int. Cl.: B60P 3/22

(54) **Citerne renforcée**
Verstärkter Tankbehälter
Reinforced tank

(30) Priorité: 24.05.2002 FR 0206368
(43) Date de publication de la demande: 26.11.2003
(73) Titulaire: Etablissement MAGYAR (S.A.), 21004 Dijon (FR)
(72) Inventeur: Magyar, Georges, c/o Etablissements Magyar S.A., 21004 Dijon Cedex (FR)
(74) Mandataire: Novagraaf Technologies

(56) Documents cités:
- EP-A- 0 882 620
- FR-A- 2 138 252
- US-A- 2 078 939
- US-A- 2 105 302
- US-A- 2 160 477
- US-A- 2 163 387
- US-A- 2 164 660
- US-A- 2 192 593
- US-A- 2 269 617
- US-A1- 2002 020 704

## Description

La présente invention concerne le domaine des citernes, notamment - mais non exclusivement - le domaine des citernes destinées au transport routier, ferroviaire, naval ou aériens, et les citernes de stockage de produits liquides ou pulvérulents utilisées horizontalement.

De telles citernes, en particulier les citernes transportables par des moyens présentant des gabarits différents, présentent habituellement un corps de citerne cylindrique assurant l'essentiel du volume utile. Ce corps de citerne est prolongé dans sa partie avant par une virole de moindre section. Les citernes mobiles doivent être renforcées pour résister aux différentes manipulations, sans pour autant que ces renfort ne viennent augmenter l'encombrement de la citerne.

Le document US2163387 présente des anneaux de renfort intérieur et des longerons qui les relient.

Le but de la présente invention est de remédier à cet inconvénient en proposant une citerne renforcée permettant de maximiser la contenance, à gabarits donnés.

L'invention concerne à cet effet selon son acception la plus générale une citerne présentant un corps partiellement cylindrique prolongé par une virole cylindrique de moindre section par l'intermédiaire d'une virole de liaison tronconique qui comporte une pluralité d'anneaux de renfort internes solidaires de la surface interne de la partie tubulaire de moindre section, elle comporte des longerons longitudinaux soudés sur les anneaux de renfort longitudinal et solidaires de la surface interne de la citerne, et des traverses soudées entre les longerons pour rigidifier l'ensemble.

La présente invention sera mieux comprise à la lecture de la description qui suit, se référant à un exemple de réalisation non limitatif exposé en relation avec les dessins annexés où :
- La figure 1 représente une vue de côté d'une citerne selon l'invention ;
- la figure 2 représente une vue de détail selon une coupe AA.

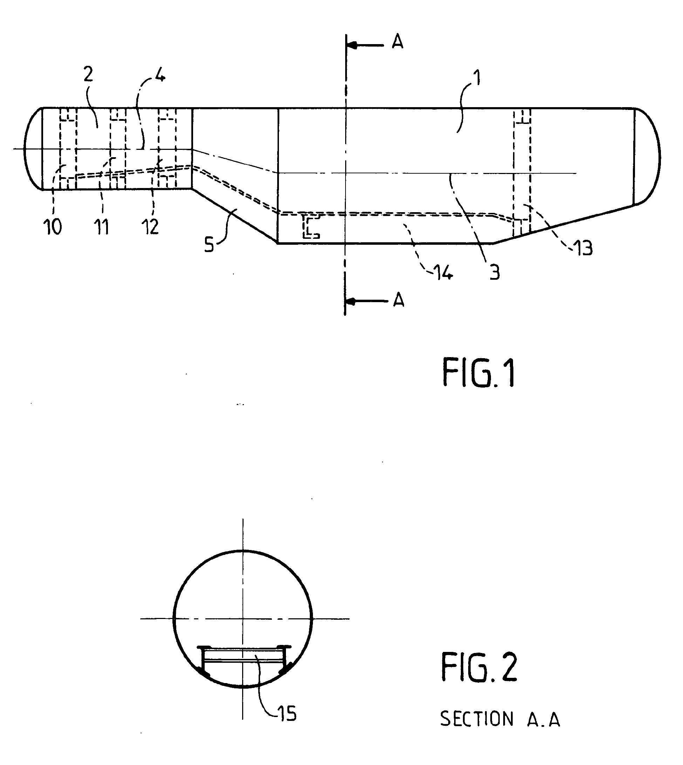

La figure 1 représente une vue de côté d'une citerne semi-remorque constituée par un corps de citerne cylindrique (1) présentant une section de 2,5 m environ. Ce corps de citerne est prolongé à sa partie avant par une partie cylindrique droite (2) de moindre section, de l'ordre de 1 m.

L'axe de symétrie (3) du corps de cylindre (1) est décalé par rapport à l'axe de symétrie (4) de la partie cylindrique (2). Dans l'exemple représenté en figure 1, l'axe de symétrie (3) du corps de cylindre (1) est parallèle à l'axe de symétrie (4) de la partie cylindrique (2), et les deux axes étant dans un plan vertical et l'axe de symétrie (4) de la partie cylindrique (2) étant décalé vers le haut par rapport à l'axe de symétrie (3) du corps de cylindre (1).

Cette disposition permet de libérer l'espace nécessaire à l'attelage de la remorque, en dessous de la partie cylindrique (2) de moindre section.

Cette partie (2) est renforcée par trois anneaux intérieurs (10 à 13) soudés sur la surface intérieure de la partie (2). Ces anneaux présentent une section circulaire ou elliptique complémentaire à celle de la partie (2).

Des longerons (14) s'étendent longitudinalement, et sont soudés sur les anneaux (10 à 13). Ces longerons (14) sont constitués par des profilés métalliques présentant une forme complémentaire de la citerne.

Des traverses (15) sont soudées entre les longerons (14) pour rigidifier l'ensemble.

## Revendications

1. Citerne présentant un corps partiellement cylindrique (1) prolongé par une virole cylindrique (2) de moindre section par l'intermédiaire d'une virole de liaison tronconique (5), qui comporte une pluralité d'anneaux de renfort internes (10, 11, 12) solidaires de la surface interne de la partie tubulaire de moindre section, **caractérisée en ce qu'**elle comporte des longerons longitudinaux (14) soudés sur les anneaux de renfort longitudinal (10, 11, 12, 13) et solidaires de la surface interne de la citerne et des traverses (15) soudées entre les longerons (14) pour rigidifier l'ensemble.

2. Citerne selon la revendication 1, **caractérisée en ce que** les longerons longitudinaux (14) sont solidaires des surfaces internes du corps partiellement cylindrique (1), de la virole cylindrique (2) de moindre section et de la virole de liaison tronconique (5).

3. Citerne selon l'une des revendications 1 à 2, **caractérisée en ce que** le ou les longerons (14) relient tous les anneaux (10, 11, 12, 13).

4. Citerne selon l'une des revendications 1 à 3, **caractérisée en ce que** le ou les longerons (14) sont des profilés métalliques présentant une forme complémentaire de la citerne.

## Patentansprüche

1. Tank mit einem teilweise zylindrischen Körper (1), der mittels eines kegelstumpfförmigen Verbindungsmantels (5) durch einen zylindrischen Mantel (2) mit kleinerem Querschnitt verlängert ist, welcher mehrere innere Verstärkungsringe (10, 11, 12) aufweist, die mit der Innenfläche des röhrenförmigen Teils mit kleinerem Querschnitt fest verbunden sind, **dadurch gekennzeichnet, dass** er Längsträger (14), die mit den Längsverstärkungsringen (10, 11, 12, 13) verschweißt sind und mit der Innenfläche des Tanks fest verbunden sind, und Querträger (15), die zwischen den Längsträgern (14) zum Versteifen der Anordnung verschweißt sind, aufweist.

2. Tank nach Anspruch 1, **dadurch gekennzeichnet, dass** die Längsträger (14) mit den Innenflächen des teilweise zylindrischen Körpers (1), dem zylindrischen Mantel (2) mit kleinerem Querschnitt und dem kegelstumpfförmigen Verbindungsmantel (5) fest verbunden sind.

3. Tank nach einem der Ansprüche 1 bis 2, **dadurch gekennzeichnet, dass** der oder die Längsträger (14) alle Ringe (10, 11, 12, 13) verbinden.

4. Tank nach einem der Ansprüche 1 bis 3, **dadurch gekennzeichnet, dass** der oder die Längsträger (14) Metallprofile mit einer zu dem Tank komplementären Form sind.

## Claims

1. Tank having a partially cylindrical body (1) extended by a cylindrical shell (2) of smaller cross section via a frustoconical connecting shell (5), which comprises a plurality of internal reinforcing rings (10, 11, 12) secured to the internal surface of the tubular part of smaller cross section, **characterized in that** it comprises longitudinal members (14) welded to the longitudinal reinforcing rings (10, 11, 12, 13) and secured to the internal surface of the tank and crossmembers (15) welded between the longitudinal members (14) in order to stiffen the assembly.

2. Tank according to Claim 1, **characterized in that** the longitudinal members (14) are secured to the internal surfaces of the partially cylindrical body (1), of the cylindrical shell (2) of smaller cross section and of the frustoconical connecting shell (5).

3. Tank according to either of Claims 1 and 2, **characterized in that** the longitudinal member or members (14) connect all the rings (10, 11, 12, 13).

4. Tank according to one of Claims 1 to 3, **characterized in that** the longitudinal member or members (14) are metal profiles having a shape complementary to that of the tank.
